(19) Europäisches Patentamt
European Patent Office
Office européen des brevets

(11) Veröffentlichungsnummer: **0 074 537**
**A1**

(12) # EUROPÄISCHE PATENTANMELDUNG

(21) Anmeldenummer: 82107873.0

(22) Anmeldetag: 27.08.82

(51) Int. Cl.$^3$: C 07 C 91/08
C 08 G 18/18

(30) Priorität: 04.09.81 DE 3135065

(43) Veröffentlichungstag der Anmeldung:
23.03.83 Patentblatt 83/12

(84) Benannte Vertragsstaaten:
BE DE FR GB

(71) Anmelder: Ruhrchemie Aktiengesellschaft
Bruchstrasse 219
D-4200 Oberhausen 13(DE)

(72) Erfinder: Weber, Jürgen, Dr. Dipl.-Chem.
Bunsenstrasse 17
D-4200 Oberhausen 13(DE)

(72) Erfinder: Falk, Volker, Dr. Dipl.-Chem.
Lützowstrasse 36
D-4200 Oberhausen 13(DE)

(72) Erfinder: Kniep, Claus
Rosenstrasse 93
D-4200 Oberhausen 1(DE)

(72) Erfinder: Behme, Klaus Jürgen
Kurmainzerstrasse 25
D-6239 Eppstein(DE)

(74) Vertreter: Reichelt, Karl-Heinz, Dr.
m. Br. Ruhrchemie Aktiengesellschaft Abt. PLD Postfach
13 01 60
D-4200 Oberhausen 13(DE)

(54) **N,N,N'-Trimethyl-N'-2-hydroxyethyl-propylendiamin, Verfahren zu seiner Herstellung, Polyurethane, die 0,01 bis 5 Gew.-N,N,N'-Trimethyl-N'-2-hydroxyethylpropylendiamin enthalten, und seine Verwendung als Katalysator.**

(57) Die neue chemische Verbindung N,N,N'-Trimethyl-N'-2-hydroxyethyl-propylendiamin wird durch Umsetzung von Dimethylaminopropylamin und Ethylenoxid und nachfolgender Reaktion des gebildeten N,N-Dimethyl-N'-2-hydroxyethyl-propylendiamin mit Formaldehyd unter Druck in Gegenwart von Wasserstoff und Nickelkatalysatoren hergestellt. N,N,N'-Trimethyl-N'-2-hydroxyethyl-propylendiamin dient als Katalysator zur Herstellung von Polyurethanen, wo es im Vorlauf der Polymerisation mit in die Makromoleküle eingebaut wird.

EP 0 074 537 A1

Oberhausen 13, 03.09.1981
PLD bin-eib - R 1916 -

Ruhrchemie Aktiengesellschaft, Oberhausen 13

**N,N,N'-Trimethyl-N'-2-hydroxyethyl-propylendiamin, Verfahren zu seiner Herstellung, Polyurethane, die 0,01 bis 5 Gew.-% N,N,N'-Trimethyl-N'-2-hydroxyethyl-propylendiamin enthalten und seine Verwendung als Katalysator**

Die Erfindung betrifft die chemische Verbindung N,N,N'-Trimethyl-N'-2-hydroxyethyl-propylendiamin, ein Verfahren zu ihrer Herstellung, Polyurethane mit 0,01 bis 5 Gew.-% N,N,N'-Trimethyl-N'-2-hydroxyethyl-propylendiamin und ihre Verwendung als Katalysator zur Herstellung von Polyurethanen.

Es ist bekannt, daß die Addition von Verbindungen mit beweglichem Wasserstoff an Isocyanate, die zu Polyurethanen führt, durch tertiäre Amine katalysiert wird. Auch bestimmte tertiäre Hydroxyalkylamine wurden als Katalysatoren für die Herstellung von Polyurethanen aus den genannten Ausgangsstoffen beschrieben. So kann man für diesen Zweck z.B. Dimethyläthanolamin verwenden. Als nachteilig erweist es sich jedoch, daß diese Verbindung ziemlich flüchtig ist und schlechtes Gelbildungs- und Härtungsvermögen besitzt. Daher setzt man Dimethyläthanolamin im

allgemeinen nur als Co-Katalysator zusammen mit anderen Katalysatoren ein.

In der DE-OS 26 25 684 ist ein Verfahren zur Beschleunigung von Additions- und Polymerisationsreaktionen organischer Isocyanate durch basische Katalyse beschrieben.

Als Katalysator finden bei dieser Arbeitsweise Hydroxyalkyl-tert.-amine mit wenigstens einer primären Hydroxyäthylgruppe der allgemeinen Formel

$$Y - \underset{|}{\overset{CH_3}{N}} - [CH_2 - CH_2 - \overset{CH_3}{\underset{}{N}}]_n - Z$$

mit Y: $CH_3$ oder Z

Z: $CH_2-CH_2-OH$

n: 1 oder 2

Anwendung.

Diese Verbindungen eignen sich zwar als Katalysatoren für die Herstellung von Polyurethanen aus Isocyanaten. Ihre Herstellung nach der Leuckart-Synthese durch Umsetzung von Aminen mit Aldehyden oder Ketonen durch Erhitzen mit Ameisensäure ist aber technisch aufwendig und, bedingt durch den erforderlichen hohen Ameisensäureüberschuß und eine umständliche Aufarbeitung des Reaktionsprodukts nicht immer wirtschaftlich durchzuführen.

Es bestand daher die Aufgabe, einen leicht herzustellenden Katalysator für die Addition von Verbindungen mit beweglichem Wasserstoff an Isocyanate zu entwickeln, der großtechnisch auf einfache Art und Weise herstellbar ist.

Die Erfindung besteht in der chemischen Verbindung N,N,N'-Trimethyl-N'-2-hydroxyethyl-propylendiamin.

Die Herstellung der neuen Verbindung kann erfindungsgemäß in einer zweistufigen mit hoher Selektivität ablaufenden Synthese erfolgen.

Im ersten Reaktionsschritt werden Dimethylaminopropylamin und Ethylenoxid zu N,N-Dimethyl-N'-2-hydroxyethyl-propylendiamin umgesetzt. Beide Ausgangsstoffe sind großtechnisch verfügbar und die Reaktion erfolgt mit hoher Selektivität. Die Addition des Ethylenoxids erfolgt bei Temperaturen zwischen 80 und 150°C und Drücken von 0 bis 20 bar. Unter diesen Bedingungen verläuft die Reaktion mit einer Selektivität von 80 bis 90 % bezogen auf das substituierte Hydroxyalkylamin.

Die aus der Umsetzung von Amin und Ethylenoxid resultierende Verbindung wird darauf in einem zweiten Reaktionsschritt mit Formaldehyd in Gegenwart von Wasserstoff zu N,N,N'-Trimethyl-N'-2-hydroxyethyl-propylendiamin methyliert Die Umsetzung mit Wasserstoff kann nach bekannten Verfahren erfolgen. Besonders bewährt haben sich Nickelkatalysatoren mit einem Nickelgehalt von 30 bis 60 Gew.-% und Trägern wie Kieselsäure, Aluminiumoxid oder Aluminiumsilikaten. Die Reaktion wird üblicherweise bei 80 bis 180°C und 80 bis 120 bar durchgeführt.

Die neue Verbindung hat sich als ausgezeichneter Katalysator für die Herstellung von Polyurethanen aus Isocyanaten und Verbindungen mit beweglichem Wasserstoffatom erwiesen. Auf diesem Anwendungsgebiet kann sie

sowohl allein als auch zusammen mit anderen tertiären Aminen oder mit metallorganischen Verbindungen verwendet werden. Die Art der Reaktionskomponenten unterliegt hierbei keiner Beschränkung. So kann man Isocyanate mit allen Polyolen, die zur Herstellung von Polyurethanen verwendet werden, in Gegenwart der erfindungsgemäßen Verbindung als Katalysator umsetzen. Geeignete, mehrwertige Alkohole sind Glykol, Glycerin und höhere Polyole, auch wenn diese andere funktionelle Gruppen enthalten, z.B. Saccharose und Aminopolyole. Die Hydroxyfunktion des Polyols kann primär oder sekundär oder ein Gemisch von beiden sein. Im allgemeinen kann jedes Polyol verwendet werden, das wenigstens zwei aktive Wasserstoffatome aufweist.

In den folgenden Beispielen sind die Herstellung der neuen Verbindung und ihre physikalischen Eigenschaften näher beschrieben.

Beispiel 1

Herstellung von N,N-Dimethyl-N'-2-hydroxyethyl-propylendiamin

1020 g (10 Mol) N,N-Dimethylaminopropylamin werden in einem 5 l Autoklaven, der zuvor mit $N_2$ gespült wird, vorgelegt. Nach Druckprüfung durch Aufdrücken von 10 bar $N_2$-Druck wird auf 2 bis 4 bar $N_2$-Druck entspannt und auf 120°C aufgeheizt. Der Druck erhöht sich hierbei auf 3 bzw. 5,2 bar. Nach Erreichen der Solltemperatur werden mittels einer Dosierpumpe, deren Pumpenköpfe auf 0 bis 5°C gekühlt werden, 132 g (3 Mol) Ethylenoxid innerhalb einer Stunde zudosiert. Der Inhalt des Autoklaven wird gerührt. Anschließend wird das Produktgemisch noch weitere zwei Stunden bei 120°C

gerührt, abgekühlt und destillativ aufgearbeitet.

Die Destillation erfolgt in einer Kolonne mit 24 Böden (13 mbar, Rücklauf-Verhältnis: 5 : 1)

| | |
|---|---|
| Ausbeute: | 82 % der Theorie |
| Dichte ($d_4^{20}$) | 0,949 |
| Brechung ($n_D^{20}$) | 1,4668 |
| $H_2O$-Gehalt | ~0,4 % |

| | |
|---|---|
| Gesamtstickstoff (sekundäurer + tertiärer N) | 19,18 % (Theorie) |
| Gesamtstickstoff analytisch ermittelt | 18,71 % |
| tertiärer Stickstoff | 9,58 % (Theorie) |
| tertiärer Stickstoff analytisch ermittelt | 9,18 % |

Beispiel 2

Herstellung von N,N,N'-Trimethyl-2-hydroxyethyl-propylendiamin

365 g (2,5 Mol) N,N-Dimethyl-N'-2-hydroxyethyl-propylendiamin, 375 ml Isopropanol und 10 Gew.-% Nickelkatalysator (Zusammensetzung etwa 52 Gew.-% Ni, Rest Kieselgur und Aktivatoren) bezogen auf Amin werden in einem 3 l Autoklaven, der zuvor mit $N_2$ gespült wird, vorgelegt. Nach Druckprüfung wird ein Druck von 20 bar $H_2$ eingestellt und auf 150°C aufgeheizt. Nach Erreichen der Solltemperatur wird der $H_2$-Druck auf 50 bar eingestellt und mittels einer Dosierpumpe werden 375 g (3,75 Mol) Formaldehyd (als 30 % wässrige Formalinlösung) binnen 30 Minuten eingepumpt. Gleichzeitig wird ein Verbrauch von $H_2$ beobachtet, der laufend durch Konstanthalten des Druckes von 50 bar $H_2$ ergänzt wird. Man läßt anschließend noch 2 Stunden bei 100 bar $H_2$ und 150°C die Produktmischung nachreagieren, kühlt ab, filtriert den Katalysator ab und destilliert.

Die Destillation erfolgt in einer Kolonne mit 24 Böden (13 mbar, Rücklauf-Verhältnis: 5 : 1)

Ausbeute: 76 % der Theorie

| | |
|---|---|
| Dichte ($d_4^{20}$) | 0,909 |
| Brechung ($n_D^{20}$) | 1,4569 |
| $H_2O$-Gehalt | 0,2 Gew.-% |
| Flammpunkt | 94°C |

Siedetemperatur (1013 mbar) ca. 227°C

N-Analyse (Titration)

| | |
|---|---|
| Gesamtstickstoff | 17,5 Gew.-% (Theorie) |
| Gesamtstickstoff analyt.ermittelt | 17,16 Gew.-% |
| tertiärer Stickstoff | 17,14 Gew.-% (97,9 % Theorie) |

| Elementaranalyse | %C | %H | %N | %O | Σ% |
|---|---|---|---|---|---|
| Ermittelte Werte | 60,04 | 12,31 | 17,38 | 10,15 | 99,88 |
| (Doppelbestimmung) | 59,90 | 12,34 | 17,29 | 10,25 | 99,78 |
| Theoretische Werte | 59,96 | 12,58 | 17,48 | 9,98 | 100,00 |

Beispiel 3

Herstellung von Polyurethan-Schäumen

3a) Herstellung von Polyurethan-Weichschaum

In einem 1 l Papierbecher werden Polyol, Wasser, Stabilisator und der Aktivator sowie Zinn-II-octoat entsprechend den in der Tabelle 1 angegebenen Mengen eingefüllt und mittels einer an einem Rührer befestigten Mischscheibe von 63 mm Durchmesser bei 1400 Umdrehungen pro Minute 15 sec lang vermischt. Im Anschluß hieran wird die in der Tabelle 1 angegebene Menge an Polyisocyanat zugegeben und wie zuvor beschrieben während 6 bis 8 sec intensiv vermischt. Die Mischung wird in eine Papierform gegossen, wo die Schäumung eintritt. Nach Abschluß des Aufschäumens wird der vorliegende Schaum in einem Ofen mit 70°C über 15 Minuten gehärtet. Der vorliegende Blockweichschaum ist offenporig und feinzellig. Die Untersuchungsbefunde des Endproduktes sind der Tabelle 1 zu entnehmen.

3b) Herstellung von Polyurethan-Form-Weichschaum

Bei der Herstellung von Polyurethan-Form-Weichschaum wird wie unter 3a) angegeben gearbeitet. Die Mengen der einzelnen benötigten Stoffe sind in der Tabelle 2 aufgeführt. Der abschließende Nachheizvorgang mittels eines Ofens kann entfallen. Die Untersuchungsbefunde des Endproduktes sind der Tabelle 2 zu entnehmen.

3c) Herstellung von Polyurethan-Hartschaum

Bei der Herstellung von Polyurethan-Hartschaum wird wie unter 3a) angegeben gearbeitet. Die Mengen der einzelnen, benötigten Stoffe sind in der Tabelle 3 aufgeführt. Der

abschließende Nachheizvorgang mittels eines Ofens kann entfallen. Die Untersuchungsbefunde des Endproduktes sind der Tabelle 3 zu entnehmen.

Tabelle 1

Verschäumungsversuche zur Herstellung von Polyurethan-Block-Weichschäumen unter Benutzung von N,N,N'-Trimethyl-N'-2-hydroxyethyl-propylendiamin

| Polyol[1] (100 g) | Wasser (g) | Amin[2] (g) | Stab. B 3640[3] (g) | Stab. L 540[4] (g) | SO[5] (g) | DT 80[6] (g) | Start-zeit (sec) | Steig-zeit (sec) | Schaum-beurt. | Rg[7] |
|---|---|---|---|---|---|---|---|---|---|---|
| DE 7000 | 2,5 | 0,36 | 0,8 | - | 0,25 | 35,2 | 15 | 122 | 8 | 36,4 |
| DE 7000 | 2,5 | 0,36 | 0,8 | - | 0,22 | 35,2 | 16 | 124 | 9 | 36,9 |
| DE 7000 | 2,5 | 0,36 | 0,8 | - | 0,20 | 35,2 | 16 | 127 | 9 | 36,7 |
| DE 7160 | 4,0 | 0,36 | - | 0,8 | 0,18 | 51,0 | 14 | 92 | 9 | 25,2 |
| DE 7100 | 4,0 | 0,36 | - | 0,8 | 0,20 | 51,0 | 14 | 92 | 9 | 25,2 |

1) Verkaufsprodukte der Bayer AG, Leverkusen (Desmophen)*
2) N,N,N'-Trimethyl-N'-2-hydroxyethyl-propylendiamin
3) Verkaufsprodukt der Th-Goldschmidt AG, Essen (Polysiloxan-Gemisch; Schaumstabilisator)
4) Verkaufsprodukt der Union Carbide Comp. (Polysiloxan-Gemisch; Schaumstabilisator)
5) Zinn-II-octoat
6) Desmodur T 80, Verkaufsprodukt der Bayer AG, Leverkusen (Isomerengemisch von 2,4 bzw. 2,6 Toluylendiisocyanat, Verhältnis 20 : 20)

7) Raumgewicht in g/l
8) stark geschlossene Zellen
9) feine und gleichmäßige Zellstruktur (offenzellig)

* Desmophen 7 100: Glycerin / Propylenoxid-Äthylenoxid-Additionsverbindung mit einem Molekulargewicht von 3500, einer OH-Zahl von 47 mit 20 Mol-% primärer Hydroxylgruppen (Polyol für Blockweichschäume)

Tabelle 2

Verschäumungsversuch zur Herstellung von Polyurethan-Form-Weichschaum unter Benutzung von N,N,N'-Trimethyl-N'-2-hydroxyethyl-propylendiamin

| Polyol 1) (98 g) | Wasser (g) | Amin 2) (g) | Stab. B 4113 3) (g) | Abmisch-komponente (g) | $Cl_3CF$ 5) (g) | Diiso-cyanat 6) (g) | Start-zeit (sec) | Steig-zeit (sec) | Schaum-beurt. | Rg 7) |
|---|---|---|---|---|---|---|---|---|---|---|
| Caradol 36-1 | 2,45 | 1,0 | 0,4 | 2,0 | 10,0 | 39,4 | 10 | 170 | 8 | |

1) Verkaufsprodukt der Deutschen Shell: Gycerin/Propylenoxid-Ethylenoxid-Additionsverbindung mit einem Molekulargewicht von ca. 4800, einer OH-Zahl von 35 mit 70 Mol-% primärer Hydroxylgruppen (Polyol für kalthärtende Schaumstoff-Formteile)

2) N,N,N'-Trimethyl-N'-2-hydroxyethyl-propylendiamin

3) Verkaufsprodukt der Th-Goldschmidt AG: Polysiloxangemisch für kalthärtende Schaumstoffe

4) Lupranol 2000, Verkaufsprodukt der BASF, dient zur Erhöhung der Zellöffnung

5) Trichlorfluormethan: Treibmittel

6) MDJ/TDJ 60/40 : MDJ = Diphenylmethandiisocyanat; TDJ = 2,4- bzw. 2,6-Toluylendiisocyanat im Verhältnis 80 : 20

7) Raumgewicht in g/l

8) feine und gleichmäßige Zellstruktur (offenzellig)

Tabelle 3

Verschäumungsversuch zur Herstellung von Polyurethan-Hartschaum unter Benutzung von N,N,N'-Trimethyl-N'-2-hydroxyethyl-propylendiamin

| Polyol[1] (100 g) | Amin[2] (g) | Diiso-[3] cyanat | $Cl_3CF$[4] (g) | Start-zeit (sec) | Steig-zeit (sec) | Schaum-beurt. | Rg[5] |
|---|---|---|---|---|---|---|---|
| Baytherm 4110 R | 2,0 | 130 | 30 | 15 | 63 | 6 | 27,0 |

1) Baytherm 4110 ist ein Verkaufsprodukt der Bayer AG, ist eine Hartschaumformulierung aus Polyolen der OH-Zahl 410 und enthält 1,4 Gew-% Wasser und ein Teil eines Schaumstabilisators

2) N,N,N'-Trimethyl-N'-2-hydroxyethyl-propylendiamin

3) Desmodur 44V20 (MDJ): rohes Diphenylmethandiisocyanat, Verkaufsprodukt der Bayer AG

4) Trichlorfluormethan: Treibmittel

5) Raumgewicht in g/l

6) feinzelliger und geschlossenzelliger Polyurethan-Hartschaum

Oberhausen 13, 03.09.1981
PLD bin-eib - R 1916 -

Ruhrchemie Aktiengesellschaft, Oberhausen 13

## Patentansprüche

1. Die chemische Verbindung N,N,N'-Trimethyl-N'-2-hydroxyethyl-propylendiamin.

2. Verfahren zur Herstellung von N,N,N'-Trimethyl-N'-2-hydroxyethyl-propylendiamin, dadurch gekennzeichnet, daß Dimethylaminopropylamin mit Ethylenoxid zu N,N-Dimethyl-N'-2-hydroxyethyl-propylendiamin und dieses mit Formaldehyd in Gegenwart von Wasserstoff und einem Nickelkatalysator zu N,N,N'-Trimethyl-N'-2-hydroxyethyl-propylendiamin umgesetzt wird.

3. Polyurethane, die 0,01 bis 5 Gew.-% an freiem und gebundenem N,N,N'-Trimethyl-N'-2-hydroxyethyl-propylendiamin enthalten.

4. Verwendung von N,N,N'-Trimethyl-N'-2-hydroxyethyl-propylendiamin als Katalysator zur Herstellung von Polyurethanen.

Europäisches Patentamt

# EUROPÄISCHER RECHERCHENBERICHT

0074537

Nummer der Anmeldung

EP 82 10 7873

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 628 464 (RICHTER GEDEON VEGYESZETI GYAR) *Seite 4, Beispiele; Patentanspruch 1* | 1-2 | C 07 C 91/08<br>C 08 G 18/18 |
| Y | EP-A-0 027 209 (RUHRCHEMIE) *Patentansprüche; Seite 4* | 1-4 | |
| Y | DE-A-2 553 137 (BASF WYANDOTTE) *Beispiel 1; Patentansprüche 1,6,7* | 1 | |
| D,Y | FR-A-2 314 208 (AIR PRODUCTS AND CHEMICALS) *Patentansprüche* | 1-4 | |

RECHERCHIERTE SACHGEBIETE (Int. Cl. 3)

C 07 C 91/00
C 08 G 18/00

Der vorliegende Recherchenbericht wurde für alle Patentansprüche erstellt.

| Recherchenort | Abschlußdatum der Recherche | Prüfer |
|---|---|---|
| DEN HAAG | 08-12-1982 | MOREAU J.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503. 03.82